(19) Europäisches Patentamt
European Patent Office
Office européen des brevets

(11) Veröffentlichungsnummer: **0 142 675**
**B1**

(12) # EUROPÄISCHE PATENTSCHRIFT

(45) Veröffentlichungstag der Patentschrift: **01.06.88**

(51) Int. Cl.⁴: **C 08 L 67/02**, C 08 J 3/12

(21) Anmeldenummer: **84111351.7**

(22) Anmeldetag: **24.09.84**

(54) **Formmassen aus thermoplastischem Polyester und Pfropfkautschuk, Verfahren zu ihrer Herstellung und ihre Verwendung zur Herstellung von Formkörpern.**

(30) Priorität: **07.10.83 DE 3336499**

(43) Veröffentlichungstag der Anmeldung: **29.05.85 Patentblatt 85/22**

(45) Bekanntmachung des Hinweises auf die Patenterteilung: **01.06.88 Patentblatt 88/22**

(84) Benannte Vertragsstaaten: **DE FR GB IT**

(56) Entgegenhaltungen:
**EP - A - 0 029 931**
**EP - A - 0 083 796**
**EP - A - 0 139 084**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Binsack, Rudolf, Dr., Bethelstrasse 4a, D-4150 Krefeld (DE)**
Erfinder: **Rempel, Dieter, Dr., Max-Beckmann-Strasse 35, D-5090 Leverkusen 1 (DE)**
Erfinder: **Wulff, Claus, Dr., Richard-Strauss-Strasse 21, D-4150 Krefeld 1 (DE)**
Erfinder: **Lindner, Christian, Dr., Riehler Strasse 200, D-5000 Köln 60 (DE)**
Erfinder: **Schwittay, Dieter, D.I., Blankenburg 16B, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 142 675 B1

ACTORUM AG

**Beschreibung**

Die Erfindung betrifft thermoplastische Formmassen mit verbesserter Zähigkeit bei tiefen Temperaturen aus thermoplastischem Polyester und vernetzten Pfropfkautschuken aus der Reihe der Dienkautschuke und der Acrylatkautschuke, ein Verfahren zur Herstellung dieser Formmassen durch Erhitzen der Komponenten auf Temperaturen unterhalb des Polyester-Schmelzpunktes und die Verwendung dieser Formmassen zur Herstellung von Formkörpern.

Thermoplastische Polyester, vornehmlich Polyethylenterephthalat, Polybutylenterephthalat und einige Terephthalsäure-Copolyester haben zunehmend technische Bedeutung erlangt wegen ihrer herausragenden technologischen Eigenschaften, wie Steifigkeit, Härte, Abriebfestigkeit, dynamische und thermische Belastbarkeit, sowie ihrer schnellen Verarbeitbarkeit. Ein Nachteil dieser Formmassen ist die unbefriedigende Zähigkeit.

Es gibt eine Reihe von Vorschlägen, die Zähigkeit thermoplastischer Polyester durch Zumischen von Polymerisaten zu verbessern. So wurden vorgeschlagen (Co)-polystyrole (DE-OS 16 94 173, DE-OS 19 61 226, DE-OS 20 35 390, DE-OS 22 48 242), Polyolefine (EP-A 13 941), gepfropfte Acrylatkautschuke (DE-PS 24 44 584, DE-OS 27 26 256) und gepfropfte Dienkautschuke (DE-PS 23 48 377). Es wurden darüber hinaus gepfropfte Acrylatkautschuke und gepfropfte Dienkautschuke vorgeschlagen, die eine ganz spezifische Pfropfstruktur aufweisen bzw. nach bestimmten Verfahren hergestellt worden sind (EP-A 22 216, EP-A 50 265, EP-A 50 262, EP-A 64 207, DE-OS 31 14 772).

Obwohl diese Formmassen bereits eine verbesserte Zähigkeit aufweisen, genügen sie für wichtige Anwendungen, z.B. in Kraftfahrzeugen, wo bei Zusammenstößen große Deformationskräfte wirksam werden können, nicht den gestellten Anforderungen, insbesondere bei Temperaturen von 0 bis −20 °C oder gar bis zu −30 oder −40 °C.

Überraschenderweise wurde nun ein Verfahren gefunden, das unerwartet zu zäheren Produkten führt: Erhitzt man Polyester und Pfropfkautschuk zusammen auf Temperaturen unterhalb des Polyester-Schmelzpunkts, so erhält man eine «Ankopplung» derart, daß der durch Lösefraktionierung mit 1.1.1.3.3.3-Hexafluor-2-propanol (nachfolgend kurz: Hexafluorisopropanol) erhältliche unlösliche Rückstand nicht nur Kautschuk, sondern auch einen Polyesteranteil enthält.

Als Maß für die «Ankopplung» wird im folgenden der Ankopplungsgrad als das Gewichtsverhältnis von angekoppeltem thermoplastischem Polyester zur Gesamtmenge an Pfropfkautschuk B definiert.

Zur Bestimmung des Ankopplungsgrads werden die Formmassen bei 25 °C mit Hexafluorisopropanol bis zur Gewichtskonstanz, d.h. bis der gesamte lösliche thermoplastische Polyester gelöst ist, behandelt. In dem verbleibenden unlöslichen Rückstand wird der Polyesteranteil bestimmt, z.B. durch Totalverseifung und anschließende Bestimmung der Polyesterkomponenten.

Die EP-A 29 931 betrifft ein Verfahren zum Verspritzen von Polyethylenterephthalat bei niedrigen Formtemperaturen, wozu ein Zusatz von 2 bis 30 Gew.-% gepfropftem Acrylatkautschuk empfohlen wird. Hierdurch wird die Kristallinität und damit die Formbeständigkeit bei höheren Temperaturen erhöht. Im Beispiel dieser Veröffentlichung werden aus Polyethylenterephthalat/Kautschuk-Mischung gespritzte Scheiben 24 Stunden bei 150 °C getempert. Weder fällt die Temperatur in die Grenzen unserer Patentansprüche noch wird der geforderte Ankopplungsgrad erreicht.

Die nicht vorveröffentlichte, aber ältere EP-A 139 084 betrifft ein Verfahren zur Herstellung von kerbschlagzähen Formmassen, erhalten durch thermische Behandlung von Kunststoffmischungen, die überwiegend Poly(alkylenterephthalat) enthalten, in fester Form, dadurch gekennzeichnet, daß die Kunststoffmischung

A. 70 bis 95 Gew.-% Poly(alkylenterephthalat) und

B. 5 bis 30 Gew.-% eines an sich bekannten elastifizierenden Acrylat-Pfropfcopolymeren

enthält und daß die Kunststoffmischung bei Temperaturen 15 bis 60 °C unterhalb des Schmelzpunktes der reinen Komponente A. in einer Inertgasatmosphäre behandelt wird, sowie derart behandelte Formmassen.

Die nach dem erfindungsgemäßen Verfahren behandelten Mischungen zeigen neben verbesserter Zähigkeit in der Regel auch erhöhte Wärmeformbeständigkeit, erhöhte Schmelzwärme und erhöhte Schmelztemperatur.

Es ist zwar bekannt, das Molekulargewicht bzw. die Viskosität von thermoplastischen Polyestern, besonders von Polyalkylenterephthalaten, durch Erhitzen auf Temperaturen unterhalb des Polyester-Schmelzpunktes unter Inertgas bzw. bei vermindertem Druck zu erhöhen. Hierdurch werden die mechanischen Eigenschaften der Polyester, insbesondere die Zähigkeit, aber nicht nennenswert verändert. Bei einer Festphasennachkondensation in Gegenwart von Pfropfkautschuk hätte man erwarten müssen, daß die Pfropfprodukte, insbesondere die auf Polybutadien-Basis, bei den langen Verweilzeiten bei hohen Temperaturen thermisch geschädigt und damit unbrauchbar werden und/oder daß Vernetzungen der Mischungen bis zur Versprödung stattfinden würden.

Gegenstand der Erfindung sind thermoplastische Formmassen aus

A) 65–97 Gew.-% (bezogen auf A + B) thermoplastischem Polyester aus der Reihe der Alkylenpolyester, segmentierten Copolyester, vollaromatischen Polyester, vollaromatischen Polyestercarbonate und aromatischen Polycarbonate und

B) 3–35 Gew.-% (bezogen auf A + B) Pfropfkautschuk mit einem Gehalt an freiem Pfropfmonomer-(Co)polymerisat von ≤ 15 Gew.-% (bezogen auf B), erhältlich durch Pfropfreaktion von

a) 15–60 Gew.-% (bezogen auf B) Vinylmonomer aus der Reihe Styrol, α-Methylstyrol, Acrylnitril, $C_1$–$C_8$-Alkylacrylat, $C_1$–$C_6$-Alkylmethacrylat, Hydroxy-$C_2$–$C_8$-alkyl(meth)acrylat, Epoxy-$C_2$–$C_8$-alkyl(meth)-acrylat auf

b) 40–85 Gew.-% (bezogen auf B) Pfropfgrundlage mit einem Gelgehalt von ⩾ 50 Gew.-% aus der Reihe der

α) Dienkautschuke,

β) Acrylatkautschuke,

wobei 5–30 Gew.-% eines Acrylat-Pfropfcopolymeren ausgenommen sind.

dadurch gekennzeichnet, daß sie einen Ankopplungsgrad von mindestens 0,05, insbesondere von mindestens 0,08, bestimmt durch Lösefraktionierung in Hexafluorisopropanol, aufweisen.

Weiterer Gegenstand der Erfindung ist ein Verfahren zur Herstellung dieser Formmassen, wonach man die Mischung der Komponenten A und B – vorzugsweise unter möglichst weitgehendem Ausschluß von Sauerstoff – auf Temperaturen von 5 bis 80, vorzugsweise 10 bis 50, insbesondere 15 bis 40°C, unterhalb des Polyester-Schmelzpunkts, gemessen als Schmelztemperatur-Maximum mittels Differential Scanning Calorimeter (DCS) bei einer Aufheizgeschwindigkeit von 20°C/Minute, erhitzt, bis ein Ankopplungsgrad von mindestens 0,05 erreicht ist.

Für das erfindungsgemäße Verfahren benötigt man in der Regel mindestens eine halbe Stunde, vorzugsweise 1 Stunde, insbesondere mindestens 2 Stunden und – besonders bevorzugt – mindestens 4 Stunden.

Weiterer Gegenstand der Erfindung ist die Verwendung dieser Massen zur Herstellung von Formkörpern.

Thermoplastische Polyester A im Sinne der Erfindung sind Alkylenpolyester, bevorzugt Polyalkylenterephthalate sowie segmentierte Copolyester, vollaromatische Polyester, voll-aromatische Polyestercarbonate und aromatische Polycarbonate, deren Säurekomponente Kohlensäure oder vornehmlich aromatische Dicarbonsäuren und deren Alkoholkomponente aliphatische, cycloaliphatische, araliphatische oder aromatische Diole oder deren Mischungen sind.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 f., Carl Hanser Verlag, München 1973).

Bevorzugte Polyalkylenterephthalate enthalten mindestens 80, vorzugsweise mindestens 90 Mol.-%, bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste. Sie können neben Terephthalsäureresten bis zu 20 Mol.-% Reste anderer aromatischer oder cycloaliphatischer Dicarbonsäuren mit 8 bis 14 C-Atomen oder aliphatischer Dicarbonsäuren mit 4 bis 12 C-Atomen enthalten, z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Neben Ethylenglykol- bzw. Butandiol-1,4-resten können sie bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3-, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und/oder deren reaktionsfähigen Derivaten (z.B. deren Dialkylestern) und Ethylenglykol und/oder Butandiol-1,4 hergestellt worden sind, und Mischungen dieser Polyalkylenterephthalate sowie Copolyester, die aus mindestens zwei der obengenannten Säurekomponenten und/oder aus mindestens zwei der obengenannten Alkoholkomponenten hergestellt sind; besonders bevorzugte Copolyester sind Poly(ethylenglykol/butandiol-1,4)-terephthalate.

Bevorzugte Polyalkylenterephthalate besitzen eine Intrinsic-Viskosität von 0,4 bis 1,5 dl/g, vorzugsweise 0,5 bis 1,4 dl/g, insbesondere 0,6 bis 1,3 dl/g, jeweils gemessen in Phenol/o-Dichlorbenzol (1:1 Gew.-Teile) bei 25°C im Ubbelohde-Viskosimeter.

Je nach den gewünschten Eigenschaften können die Polyalkylenterephthalate einzeln oder in Mischungen miteinander eingesetzt werden. Bevorzugte Mischungen enthalten

1–99, vorzugsweise 10–60, insbesondere 20–50 Gew.-% Polyethylenterephthalat, und

99–1, vorzugsweise 90–40, insbesondere 80–50 Gew.-% Polybutylenterephthalat,

jeweils bezogen auf die Summe von Polyethylen- und -butylenterephthalat.

Bevorzugte Polyalkylenterephthalate werden unter Verwendung von Titanalkoholaten, wie Titantetraisopropylat oder Titantetrabutylat, hergestellt.

Bevorzugte segmentierte Copolyester enthalten als Säurekomponente Iso- und/oder Terephthalsäurereste und als Alkoholkomponente neben Ethylenglykol-, Butandiol-1.4- oder Dihydroxytetrahydrofuranresten Reste langkettiger Diole, wobei der Gehalt an Resten langkettiger Diole vorzugsweise unter 60 Gew.-%, bezogen auf den Gesamtgehalt der Diolreste, liegt. Bevorzugte langkettige Diole sind Polyethylenglykole der Formel $HO(CH_2CH_2O)_nH$ und Polybutylenglykole der Formel
$HO(CH_2CH_2CH_2CH_2O)_mH$.

Das mittlere Molekulargewicht (Zahlenmittel Mn) der langkettigen Diole liegt im allgemeinen zwischen

500 und 5000, vorzugsweise zwischen 1000 und 3000 (und n ist somit ca. 10–100, vorzugsweise ca. 25–60; m ca. 7–70, vorzugsweise 14–40).

Das mittlere Molekulargewicht (Gewichtsmittel Mw) der segmentierten Copolyester beträgt im allgemeinen mindestens 10 000, bevorzugt mindestens 15 000 und insbesondere mindestens 20 000.

Derartige segmentierte Copolyester werden z. B. in der GB-PS 1 404 340 beschrieben.

Aromatische Polycarbonate im Sinne der Erfindung sind Homo- und Copolycarbonate auf Basis von Diphenolen, Kohlensäure bzw. deren Derivate wie z. B. Phosgen oder Kohlensäurediester, Kettenabbrechern und gegebenenfalls Verzweigungsmittel.

Bevorzugte Polycarbonate besitzen ein als Gewichtsmittel $M_w$ bestimmtes Molekulargewicht von 10 000 bis 200 000, insbesondere von 20 000 bis 80 000, ermittelt durch Lichtstreuung.

Bevorzugte Diphenole für die Herstellung der Polycarbonate entsprechen der Formel

HO–Z–OH (1)

worin Z einen zweiwertigen ein- oder mehrkernigen aromatischen Rest mit 6–30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Hydrochinon, Resorcin sowie Verbindungen der Formel

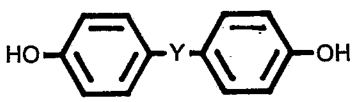
(2)

in der

Y eine Einfachbindung, einen Alkylen- oder Alkylidenrest mit 1–7 C-Atomen, einen Cycloalkylen- oder Cycloalkylidenrest mit 5–12 C-Atomen, –O–, –S–, $-\underset{O}{\overset{}{S}}-$, $-SO_2-$ oder $-\underset{O}{\overset{}{C}}-$ bedeutet, sowie deren kernalkylierte Derivate, z. B.

Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α′-Bis-(hydroxyphenyl)-diisopropylbenzole

sowie deren kernalkylierte und kernhalogenierte Verbindungen.

Die wichtigsten Diphenole seien nachfolgend aufgezählt:

Bisphenol A, 2.2-Bis-(3-methyl-4-hydroxyphenyl)-propan,
2.2-Bis-(3.5-dimethyl-4-hydroxyphenyl)-propan,
1.1-Bis-(4-hydroxyphenyl)-isobutan,
2.4-Bis-(4-hydroxyphenyl)-2-methylbutan,
1,1-Bis-(4-hydroxyphenyl)-cyclohexan,
4,4′-Dihydroxydiphenylsulfid, 4,4′-Dihydroxydiphenyl, 4,4′-Dihydroxydiphenylsulfon und α,α′-Bis-(4-hydroxyphenyl)-p-diisopropylbenzol.

Bevorzugte Polycarbonate sind Copolycarbonate auf Basis von Bisphenol A und einem der oben als bevorzugt genannten Diphenole; besonders bevorzugt sind Polycarbonate, die als Diphenolreste nur Bisphenol-A-reste enthalten.

Es ist vorteilhaft, Mischungen der Polycarbonate mit Polyalkylenterephthalaten zu verwenden. Diese Mischungen enthalten bevorzugt bis zu 60 Gew.-%, besonders bevorzugt bis zu 40 Gew.-% Polycarbonat, bezogen auf die Summe aus Polycarbonat und Polyalkylenterephthalat.

Voll-aromatische Polyester im Sinne der Erfindung sind Polyester enthaltend Iso- und/oder Terephthalsäurereste, Diphenolreste, Reste von Kettenabbrechern und gegebenenfalls von Verzweigungsmitteln. Sie werden z. B. in der Monographie «Polyesters» von V.V. Korshak und S.V. Vinogradova, Pergamon Press, Oxford 1965, S. 494, 485–486, 454–455 beschrieben.

Bevorzugte voll-aromatische Polyester besitzen relative Viskositäten von 1,18 bis 2,0, vorzugsweise von 1,2 bis 1,5 (gemessen an einer Lösung von 0,5 g Polyester in 100 ml Dichlormethan-Lösung bei 25 °C im Ubbelohde-Viskosimeter).

Besonders bevorzugte voll-aromatische Polyester enthalten Iso- und Terephthalsäurereste im Verhältnis 7:3 bis 3:7.

Bevorzugte Diphenole für die Herstellung der voll-aromatischen Polyester sind die oben für die Herstellung der Polycarbonate als bevorzugt beschriebenen Diphenole. Besonders bevorzugt ist Bisphenol A.

Voll-aromatische Polyestercarbonate im Sinne der Erfindung enthalten Iso- und/oder Terephthalsäurereste, Carbonatgruppen, Diphenolreste der allgemeinen Formel (1) bzw. (2), Reste von Kettenabbrechern und gegebenenfalls Verzweigungsmitteln. Diese Polyestercarbonate und ihre Herstellung werden beispielsweise in der Zeitschrift «Polymer» 1982, Vol 23, S. 609–612 durch C.P. Bosnyak et al. innerhalb des Artikels mit dem Titel «Synthesis and properties of some poly(bisphenol A-iso/terephthalate)-copolycarbonates» sowie in der DE-AS 1 495 302, der veröffentlichten europäischen Patentanmeldung 64 153 und dem US-Patent 4 286 083 beschrieben.

Bevorzugte voll-aromatische Polyestercarbonate besitzen ein als Gewichtsmittel bestimmtes Molekulargewicht $\overline{M}_w$ von 10 000 bis 200 000, vorzugsweise von 20 000 bis 80 000, ermittelt durch Lichtstreuung.

Bevorzugte Pfropfkautschuke B besitzen mittlere Teilchendurchmesser $d_{50}$ von 0,05 bis 1, vorzugsweise von 0,1 bis 0,8, insbesondere von 0,2 bis 0,6 µm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 [1972], 782–796) oder mittels Elektronenmikroskopie und anschließender Teilchenauszählung (G. Kämpf, H. Schuster, Angew. Makromolekulare Chemie 14, [1970], 111–129) oder mittels Lichtstreuungsmessungen.

Die Pfropfkautschuke B sind vernetzt und die Pfropfgrundlage hat einen Gelgehalt von mindestens 50 Gew.-%, vorzugsweise mindestens 80

Gew.-% und insbesondere von mindestens 90 Gew.-%. Der Gelgehalt der vernetzten Dienkautschuke wird bestimmt bei 25°C in Toluol, der Gelgehalt der vernetzten Acrylat-Kautschuke bei 25°C in Dimethylformamid (M. Hoffmann, H. Krömer, R. Kuhn, Polymeranalytik I und II, Georg Thieme Verlag Stuttgart 1977).

Die Pfropfkautschuke B sind Pfropfpolymerisate von 15 bis 60, vorzugsweise 20 bis 50, insbesondere 25 bis 40 Gew.-% wenigstens eines Vinyl- oder Vinylidenmonomeren aus der Reihe Styrol, α-Methylstyrol, Acrylnitril, $C_1$–$C_8$-Alkylacrylat, $C_1$–$C_8$-Alkylmethacrylat, Hydroxy-$C_2$–$C_8$-alkyl(meth)acrylat, Epoxy-$C_2$–$C_8$-alkyl-(meth)acrylat auf 40 bis 85, vorzugsweise 50 bis 80, insbesondere 60 bis 75 Gew.-% teilchenförmigem vernetztem Dien- oder Acrylatkautschuk, jeweils bezogen auf Pfropfkautschuk B.

Die Pfropfmonomeren können einzeln oder auch in Mischungen auf die Pfropfkautschuk-Grundlage aufgepfropft werden.

Bevorzugte Pfropfmonomere sind Methylmethacrylat sowie Mischungen aus Styrol und Methylmethacrylat und Michungen aus Styrol und Acrylnitril.

Bevorzugte Dienkautschuke sind vernetzte Homo- und/oder Copolymerisate aus konjugierten $C_4$–$C_6$-Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$–$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in «Methoden der Organischen Chemie» (Houben-Weyl), Bd. 14/1, Georg Thieme Verlag, Stuttgart 1961, S. 393–406, sowie in Ullmanns Encyclopädie der technischen Chemie, 4. Auflage, Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$–$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt.

Bevorzugte Beispiele für vernetzende Monomere mit mehr als einer copolymerisierbaren Doppelbindung sind Ester ungesättigter $C_3$–$C_{12}$-Monocarbonsäuren und ungesättigter einwertiger $C_2$–$C_{12}$-Alkohole oder gesättigter $C_2$–$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di- und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Trisacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydien-Kerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat und Triallylisocyanurat vernetzt sind (beschrieben in DE-OS 30 39 114);

b) einen Polybutadien-Kern enthalten (beschrieben in DE-OS 30 39 115);

c) hergestellt wurden «in Abwesenheit von Suspendiermittel» (beschrieben in DE-OS 31 17 052).

Bei der Herstellung der Pfropfkautschuke B durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfkautschuk B im Sinne der Erfindung ist deshalb das durch Polymerisation von Pfropfmonomeren in Gegenwart des Kautschuklatex erhaltene Produkt, genau genommen also im allgemeinen ein Gemisch aus Pfropfcopolymerisat und freiem (Co)polymerisat der Pfropfmonomeren.

Die Menge an freiem (Co)Polymerisat beträgt maximal 15 Gew.-%, vorzugsweise 10 Gew.-%, insbesondere 7 Gew.-%, bezogen auf Komponente B. Der Staudinger-Index dieser freien (Co)polymerisate soll weniger als 0,6 dl/g, vorzugsweise weniger als 0,4 dl/g betragen, gemessen im Dimethylformamid bei 25°C.

Bevorzugte gepfropfte Dienkautschuke sind z.B. in der DE-PS 2 348 377 und in den DE-OS 2 927 576, 3 025 605, bevorzugte gepfropfte Acrylatkautschuke z.B. in der DE-PS 2 444 584 und in den DE-OS 2 726 256, 3 039 114, 3 039 115, 3 117 052 beschrieben.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbpigmente und/oder Farbstoffe enthalten.

Die gefüllten bzw. verstärkten Formmassen können 10 bis 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer Silikate, Feldspat, Quarz, Talkum, Titandioxid, Wollastonit.

Die mit Flammschutzmitteln ausgerüsteten Formmassen enthalten Flammschutzmittel in einer Konzentration von im allgemeinen 5 bis 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z.B. Antimontrioxid.

Die Herstellung der Mischungen aus thermoplastischem Polyester A und Pfropfkautschuk B kann in den üblichen Mischaggregaten, wie Walzen, Knetern, Ein- und Mehrwellenextrudern, erfolgen. Die Temperatur bei der Herstellung der Mischungen sollte mindestens 10°C und zweckmäßig höchstens 90°C oberhalb des Schmelzpunktes des Polyesters liegen.

Das erfindungsgemäße Verfahren kann diskontinuierlich oder kontinuierlich unter Bedingungen, bei denen eine Oxidation weitgehend ausgeschlossen ist, d.h. unter inertem Schutzgas wie Stickstoff, Kohlendioxid, Argon oder Helium und/oder unter vermindertem Druck, durchgeführt werden. Geeignet sind alle Apparate, die solche Bedingungen ermöglichen.

Die aus den erfindungsgemäßen Formmassen durch Spritzguß oder Extrusion hergestellten Formkörper eignen sich besonders dort, wo mit hohen Stoßbelastungen gerechnet werden muß, z.B. im Kfz-Bereich für Stoßfänger, Spoiler, Rammleisten, Karosserieteile, Lenkräder, Lenkradsäulen.

Beispiele

Verwendete Komponenten

I Polybutylenterephthalat mit einer Intrinsic-Viskosität von 1,18 dl/g, gemessen in Phenol/o-Dichlorbenzol (Gew.-Verhältnis 1:1) bei 25 °C im Ubbelohde-Viskosimeter.

II Pfropfprodukt aus 80 Gew.-% Pfropfgrundlage aus vernetztem Polybutadien (Gelgehalt 85 Gew.-%, gemessen in Toluol) und 20 Gew.-% Pfropfauflage aus 72 Gew.-Teilen Styrol und 28 Gew.-Teilen Acrylnitril; mittlerer Teilchendurchmesser $d_{50}$ = 0,4, µm (Herstellung entsprechend EP-A 22 216).

III Pfropfprodukt aus 80 Gew.-% Pfropfgrundlage aus vernetztem Polybutadien (Gelgehalt 85 Gew.-%, gemessen in Toluol) und 20 Gew.-% Pfropfauflage aus Methylmethacrylat (Pfropfprodukt E aus EP-A 43 491).

IV Pfropfprodukt mit Kern/Mantel-Struktur folgender Zusammensetzung: 81 Gew.-% Pfropfgrundlage mit 0,23 Gew.-Teilen Triallylcyanurat und 99,1 Gew.-Teilen n-Butylacrylat, polymerisiert als Mantel um 0,66 Gew.-Teile Polybutadien-Kern (Gel-Gehalt der Pfropfgrundlage 89 Gew.-%, gemessen in Dimethylformamid bei 25 °C), sowie 19 Gew.-% Pfropfhülle aus 72 Gew.-Teilen Styrol und 28 Gew.-Teilen Acrylnitril; mittlerer Teilchendurchmesser $d_{50}$ = 0,5 µm (Pfropfprodukt L aus EP-A 50 262).

Herstellung und Prüfung der Formmassen

Auf einem kontinuierlich arbeitenden Zweiwellenextruder wurden die Komponenten aufgeschmolzen und homogenisiert. Die Zylindertemperaturen wurden so gewählt, daß Massetemperaturen von 260–265 °C eingehalten wurden. Der Schmelzstrang wurde vor dem Austritt aus der Düse entgast, in Wasser abgekühlt, granuliert und getrocknet (Vergleichsbeispiele 1–5).

Von den Formmassen wurden auf einer üblichen Spritzgußmaschine Normkleinstäbe gespritzt (Massetemperatur 250°C, Formtemperatur 80°C). Geprüft wurden die Kerbschlagzähigkeit (nach DIN 53 453) bei den angegebenen Temperaturen sowie die Wärmeformbeständigkeit (VICAT-Erweichungstemperatur nach DIN 53 460, Methode B), die Schmelzwärme und die Schmelztemperatur nach der DSC-Methode mit einer Aufheizgeschwindigkeit von 20°C/Minute.

Das so erhaltene Granulat wurde in einem Glasrohr von 20 mm Durchmesser 200 °C heißem Stickstoff (6 l Stickstoff pro Stunde) unterschiedlichen Zeiten ausgesetzt. Nach dem Abkühlen wurden Normkleinstäbe hergestellt und geprüft (erfindungsgemäße Beispiele 1 a/b bis 5 a).

Tabelle 1

| Beispiel | Komponente (Gew.-%) | | | IV | Erhitzungsdauer (Std.) | Kerbschlagzähigkeit (kJ/m²) | | | | | Ankopplungsgrad |
|---|---|---|---|---|---|---|---|---|---|---|---|
| | I | II | III | | | +20°C | −10°C | −20°C | −30°C | −40°C | |
| 1[1] | 77 | 23 | – | – | 0 | ng[2] | ng | 25 | 12 | 11 | 0,02 |
| 1a | 77 | 23 | – | – | 5 | ng | ng | ng | 20 | 15 | 0,06 |
| 1b | 77 | 23 | – | – | 20 | ng | ng | ng | ng | ng | 0,10 |
| 2[1] | 95 | 5 | – | – | 0 | 4 | 4 | 4 | 4 | 4 | 0,028 |
| 2a | 95 | 5 | – | – | 20 | 8 | 7 | 7 | 7 | 6 | 0,12 |
| 3[1] | 85 | 15 | – | – | 0 | 28 | 14 | 11 | 9 | 8 | 0,023 |
| 3a | 85 | 15 | – | – | 20 | ng | ng | 18 | 13 | 11 | 0,11 |
| 4[1] | 77 | – | 23 | – | 0 | ng | 10 | 8 | 7 | 6 | 0,01 |

| | | | | | | | | | | | |
|---|---|---|---|---|---|---|---|---|---|---|---|
| 4a | 77 | – | 23 | – | 20 | ng | ng | 20 | 14 | 10 | 0,09 |
| 5[1] | 77 | – | – | 23 | 0 | ng | 8 | 5 | | 3 | <0,01 |
| 5a | 77 | – | – | 23 | 20 | ng | ng | 13 | | 8 | 0,085 |

[1] Vergleichsversuche
[2] ng = nicht gebrochen

| Beispiel | VICAT B (°C) | Schmelzwärme (J/g) | Schmelztemperatur (°C) |
|---|---|---|---|
| 1[1] | 128 | 36 | 223 |
| 1a | | 41 | 224 |
| 1b | 136 | 50 | 228 |

## Patentansprüche

1. Thermoplastische Formmassen aus

A) 65–97 Gew.-% (bezogen auf A + B) thermoplastischem Polyester aus der Reihe der Alkylenpolyester, segmentierten Copolyester, vollaromatischen Polyester, vollaromatischen Polyestercarbonate und aromatischen Polycarbonate und

B) 3–35 Gew.-% (bezogen auf A + B) Pfropfkautschuk mit einem Gehalt an freiem Pfropfmonomer-(Co)polymerisat von ≤15 Gew.-% (bezogen auf B), erhältlich durch Pfropfreaktion von

a) 15–60 Gew.-% (bezogen auf B) Vinylmonomer aus der Reihe Styrol, α-Methylstyrol, Acrylnitril, $C_1$–$C_8$-Alkylacrylat, $C_1$–$C_8$-Alkylmethacrylat, Hydroxy-$C_2$–$C_8$-alkyl(meth)acrylt, Epoxy-$C_2$–$C_8$-alkyl(meth)-acrylat auf

b) 40–85 Gew.-% (bezogen auf B) Pfropfgrundlage mit einem Gelgehalt von ≥50 Gew.-% aus der Reihe der

α) Dienkautschuke,

β) Acrylatkautschuke,

wobei 5 bis 30 Gew.-% eines Acrylat-Pfropfcopolymeren ausgenommen sind, dadurch gekennzeichnet,

daß sie einen Ankopplungsgrad von mindestens 0,05, bestimmt durch Lösefraktionierung in Hexafluorisopropanol, aufweisen.

2. Formmassen nach Anspruch 1, dadurch gekennzeichnet, daß sie einen Ankopplungsgrad von mindestens 0,08 aufweisen.

3. Formmassen nach Ansprüchen 1 und 2, dadurch gekennzeichnet, daß sie 10 bis 60 Gew.-% Glasfasern, bezogen auf die Summe aus A, B und Glasfasern, enthalten.

4. Verfahren zur Herstellung der Formmassen nach Ansprüchen 1 bis 3, dadurch gekennzeichnet, daß man die Mischung der Komponenten A und B auf Temperaturen von 5 bis 80 °C unterhalb des Polyester-Schmelzpunkts, gemessen als Schmelztemperatur-Maximum mittels Differential Scanning Calorimeter (DSC) bei einer Aufheizungsgeschwindigkeit von 20 °C/Minute, erhitzt, bis ein Ankopplungsgrad von mindestens 0,05 erreicht ist.

5. Verfahren nach Anspruch 4, dadurch gekennzeichnet, daß man die Mischung auf Temperaturen von 10 bis 50 °C unterhalb des Polyester-Schmelzpunkts erhitzt.

6. Verfahren nach Ansprüchen 4 und 5, dadurch gekennzeichnet, daß man die Mischung auf Temperaturen von 15 bis 40 °C unterhalb des Polyester-Schmelzpunkts erhitzt.

7. Verfahren nach Ansprüchen 4 und 6, dadurch gekennzeichnet, daß man die Mischung erhitzt, bis ein Ankopplungsgrad von mindestens 0,08 erreicht ist.

8. Verwendung der Formmassen nach Ansprüchen 1 bis 3 zur Herstellung von Formkörpern.

## Claims

1. Thermoplastic moulding compounds of

A) 65–97% by weight (based on A + B) of thermoplastic polyesters from the series of alkylene polyesters, segmented copolyesters, fully aromatic polyesters, fully aromatic polyester carbonates and aromatic polycarbonates and

B) 3–35% by weight (based on A + B) of graft rubber having a free graft monomer-(co)polymer content of ≤15% by weight (based on B), obtainable by the grafting reaction of

a) 15–60% by weight (based on B) of vinyl monomers from the series of styrene, α-methylstyrene, acrylonitrile $C_1$–$C_8$-alkylacrylate, $C_1$–$C_8$-alkyl(meth)-acrylate, hdroxy-$C_2$–$C_8$-alkyl(meth)acrylate and epoxy-$C_2$–$C_8$-alkyl(meth)acrylate on

b) 40–85% by weight (based on B) of graft basis having a gel content of ≥50% by weight from the series of

α) diene rubbers and

β) acrylate rubbers,

with the exclusion of 5 to 30% by weight of an acrylate graft copolymer, characterised in that they have a degree of coupling of at least 0.05, determined by solution fractionation in hexafluoroisopropanol.

2. Moulding compounds according to claim 1, characterised in that they have a degree of coupling of at least 0.08.

3. Moulding compounds according to claim 1 and 2, characterised in that they contain from 10 to 60% by weight of glass fibres, based on the sum of A, B and glass fibres.

4. Process for the preparation of moulding compounds according to claims 1 to 3, characterised in that the mixture of components A and B is heated to temperatures from 5 °C to 80 °C below the polyester melting point, determined as melting temperature

maximum by differential scanning calorimeter (DSC) at a heating up rate of 20°C per minute until a degree of coupling of at least 0.05 is reached.

5. Process according to claim 4, characterised in that the mixture is heated to temperatures from 10°C to 50°C below the polyester melting point.

6. Process according to claims 4 and 5 characterised in that the mixture is heated to temperatures from 15°C to 40°C below the polyester melting point.

7. Process according to claims 4 and 6, characterised in that the mixture is heated until a degree of coupling of at least 0.08 is reached.

8. Use of the moulding compounds according to claims 1 to 3 for the production of moulded articles.

**Revendications**

1. Matières à mouler thermoplastiques à partir

A) de 65 à 97% en poids (par rapport à A + B) d'un polyester thermoplastique de la série des polyesters d'alkylène, des copolyesters segmentés, des polyesters entièrement aromatiques, des polyestercarbonates entièrement aromatiques et des polycarbonates aromatiques et

B) de 3 à 35% en poids (par rapport à A + B) d'un caoutchouc greffé avec une teneur en monomère de greffage-(co)polymère libre ≤15% en poids (par rapport à B), pouvant être obtenu par une réaction de greffage

a) de 15 à 60% en poids (par rapport à B) d'un monomère vinylique de la série du styrène, de l'α-méthylstyrène, de l'acrylonitrile, des acrylates d'alkyle en $C_1$ à $C_8$, des méthacrylates d'alkyle en $C_1$ à $C_8$, des (méth)acrylates d'hydroxyalkyle en $C_2$ à $C_8$, des (méth) acrylates d'époxy-alkyle en $C_2$ à $C_8$ sur

b) 40 à 85% en poids (par rapport à B) d'une base de greffage avec une teneur en gel ≥50% en poids de la série des

α) caoutchoucs diéniques,

β) caoutchoucs acryliques,

à l'exclusion de 5 à 30% en poids d'un copolymère acrylique greffé, caractérisées en ce qu'elles présentent un degré de couplage d'au moins 0,05, déterminé par fractionnement en solution dans de l'hexafluorisopropanol.

2. Matières à mouler selon la revendication 1, caractérisées en ce qu'elles présentent un degré de couplage d'au moins 0,08.

3. Matières à mouler selon les revendications 1 et 2, caractérisées en ce qu'elles contiennent 10 à 60% en poids de fibres de verre, par rapport à la somme de A, B et des fibres de verre.

4. Procédé de fabrication des matières à mouler selon les revendications 1 à 3, caractérisé en ce que l'on chauffe le mélange des composants A et B à des températures de 5 à 80°C au-dessous du point de fusion du polyester mesuré sous forme de pic de température de fusion à l'aide d'un calorimètre différentiel à balayage (DSC) à une vitesse de chauffage de 20°C/minute jusqu'à obtention d'un degré de couplage d'au moins 0,05.

5. Procédé selon la revendication 4, caractérisé en ce que l'on chauffe le mélange à des températures de 10 à 50°C au-dessous du point de fusion du polyester.

6. Procédé selon les revendications 4 et 5, caractérisé en ce que l'on chauffe le mélange à es températures de 15 à 40°C au-dessous du point de fusion du polyester.

7. Procédé selon les revendications 4 et 6, caractérisé en ce que l'on chauffe le mélange jusqu'à obtention d'un degré de couplage d'au moins 0,08.

8. Emploi des matières à mouler selon les revendications 1 à 3 pour la fabrication d'objets moulés.